# EUROPEAN PATENT SPECIFICATION

(11) **EP 1 838 409 B1**
(45) Date of publication and mention of the grant of the patent: **18.11.2009**
(21) Application number: 04743960.9
(22) Date of filing: 15.07.2004
(51) Int. Cl.: B01D 29/15

(54) **MICRO-FILTERING ELEMENT**
MIKROFILTERELEMENT
ELEMENT MICRO-FILTRANT

(43) Date of publication of application: 03.10.2007
(73) Proprietor: NTZ International Holding, 3147 BP Rotterdam (NL)
(72) Inventor: SHAERLAECKENS, Wilhelmus Petrus Maria, NL-3047 BP Rotterdam (NL); NIEUWLAND, Pierre Gerard Willem,, NL-3047 BP Rotterdam (NL)
(74) Representative: Dekker-Garms, Alwine Emilie
(86) International application number: PCT/IB2004/002299
(87) International publication number: WO 2006/010987

(56) References cited:
- WO-A-01/97949

## Description

The present invention relates to a micro-filter element as defined in the preamble of claim 1.

Such micro-filtering elements are generally known, e.g. from the PCT patent publication WO-0107142 in the name of Applicant, and from SAE paper 2001-01-0867 "Automatic transmission hydraulic system cleanliness - the effects of operating conditions, measurement techniques and high efficiency filters", which document is hereby regarded included.

Rather than conventional, so-called full flow filters which in fact rely on blocking particles through the provision of sufficiently small openings, and which therefore are surface based, and often of an expensive, synthetic type of material, the present micro-filter is cellulose fibre based. Such cellulose fibre based micro-filters rely on electrostatic forces for binding particles while on their way through the filter material. For this reason micro filters rely on a relatively thick body of filtering material through which oil is to be passed, and within which a main part of the "filtering" effect takes place, at least for the smallest particles. At conventional filters on the other hand filtering solely takes place on the surface of the material, for which reason the latter is maximised by using folded or pleated cardboard or other sheet material. Consequently conventional filters have a relatively low resistance, allow a relative large flow and may in principle be cleaned by reversing a flaw of medium through the filter. Micro filters may bind very small particles within its filtering body - are therefore here denoted in-depth or in-body filters, but have a relatively large flow resistance and are not reusable by inverting flow of medium. Known micro filters therefore mostly if not always come in by pass configuration rather than in an in-line configuration as for conventional full flow filters. Yet it is, for reason of a superior filtering grade, a technical aim to entirely replace conventional filters by micro-filters within an in-line configuration, i.e. preferably within an-existing structure for a hydraulic flow path of a mechanical device to be lubricated. In principle such may easily be done on the basis of an ultra high efficiency feature of the micro-filter, which effects a cleaning of oil within a passing rate, which is only a fraction from that at conventional filters.

Since these in-depth filter elements need not rely on the end closure elements for securing their structure such as at pleated paper filtering elements, and because protection of the filter by a perforated external cylindrical wall is less critical at such stiffly incorporated material, much often such type of filters are provided with loose end closure devices. This arrangement favourably allows for expansion and contraction of the micro-filter, e.g. as it becomes wet with oil. So as to prevent oil from passing between the end closure element and the axial end face of the filter material however, the filtering element is at least at one end provided with an elastically deformable element such as a spring for pressing the closure elements and the filter material to one another. It is thereto clamped between the filter housing and the relevant end closure element. While this arrangement is suitable for many applications, modem automotive applications demand for quick and easy replacement of filter cartridges.

In view of the foregoing, a solution for automotive application has been provided, such that mechanics or individual end users need not worry about correctly inserting spring and/or closure element, and/or of loosing any of the latter, while still the functions of expansion and contraction and of limiting radial passage of oil between closure element and filter material are correctly maintained, and while still the manufacture of the filtering element is kept relatively favourable.

The solution whichs is meant here is described in WO-0197949, and involves an application of closure elements for closing axial end faces of the micro-filtering material of the micro-filter element for passage of oil, wherein one of said closure elements is provided with at least a couple of axially projecting limbs, a hook-like part of which engages with a perforation of the central core of the micro-filter element, such that a mutual connection with a limited amount of mutual axial play is achieved. With these features a filter element may now be inserted as self contained cartridge into a filter housing, i.e. without the requirement of inserting further means like a spring, and without the requirement of taking specific care of the closure end elements. The latter form part of a cartridge to be inserted, while by providing axial play, closure of the axial end faces is realised in a highly favourable manner. In this respect this solution departs from an insight that the closure element may as well use the normally existing pressure difference of the filter for pressing the closure element against the axial end face of the filter material. At doing so, when combined with a snap connection, the separate pressure element may be dispensed with. Also, it is respected that any initial leakage as might occur in this boundary area at e.g. building up of pressure, is acceptable for reasons of the speed by which the pressure difference builds up, and for reason that the initial portion of leakage may be seen as part of the amount of oil that at normal operation by-passes the micro-filter, and moreover only forms a fraction of it. It is in this respect remarked that although it might at first sight seem possible that no such pressure difference exists when the oil enters the boundary area at the circumference of the closure element for reason that hydraulic pressure distributes over each axial side of the element, it gradually encounters such pressure difference in that the latter is being build up while penetrating radial towards the centre of the filter element. The cost of such a solution may be kept down if at least the latter closure elements are produced in a synthetic material. In that way they can easily be produced in unity with the limb parts for snapping into a perforation of the central core.

At replacement of full flow filters in existing designs however, i.e. in an in-line configuration instead of a dedicated by-pass circuit, a problem is encountered in that requirements as to allowable pressure differences in many automotive in-line filtering applications, conflict with the desirable pressure differences at use of micro-filters, In this respect the known micro-filter elements are less permeable at low oil temperatures for reason of increased viscosity of the oil. The latter circumstance demands for high pressure differences over a micro-filter device for letting through the oil. At the same time most of the systems in which a filter device is incorporated have a demand for very modest pressure differences, i.e. lower than what is demanded at normal operating temperatures.

It is an object of the current invention to provide for a filter element which obviates the known problem while at least to large extent maintaining the high efficiency nature of micro-filters, such that they can economically and with at least large maintenance of functionality be applied in an in-line configuration. According to the current invention such is realised by a filter element having a valve system as described in the following, preferably but not necessarily having an orifice in the valve of said system.

With such an element it is assured, in accordance with the invention, that a maximum allowable pressure difference is created over the filter element, and thus a maximum flow of oil through the micro filter element, by both the application of a by-pass flow over the filter element via a restriction, and by the use of a valve. The restriction is defined by departing from allowed pressure difference at the lowest given oil flow through the system, while the valve system limits the pressure difference at larger flows by opening at the allowable pressure difference at a given largest flow of oil. In this manner, surprisingly by the creation of a first and an additional by pass flow over the filter element, the performance of the latter is considerably enhanced. This effect is realised in a surprisingly simple design of the basis of smart use of a per se abstract feature of an orifice, which provides that the pressure difference over it is the result of a constant times the oil density times the square of the speed of flow through the orifice. It was further realised that where the characteristic of an orifice, i.e. the oil density is largely independent from oil temperature, the filter element is not Combination of these insights ultimately yielded the filter element according to the invention.

Where the mentioned by-pass flows may as well be provided in e.g. the housing of a filter device, they are according to the invention preferably provided as part of, or at least directly related to the filter element. According to a further preferred embodiment the orifice and valve means are preferably integrated into a single unit. Favourable use is further made of pressure means known per se for pressurising an end closure means to an axial end face of the element, by using the latter for maintaining at least part of the valve system together. In this manner the valve system may at least partially favourably be produced and provided in loose parts.

A further particular aspect of the invention relates to a favorable manner incorporating a seal for connection of the filter element to an outlet leads of the hydraulic system into which the element is to be incorporated. According to the invention, a sealing element is held into position by locally provided notches. In this manner, favourably an injection moulded element part may be used - after all no grooves are required, rendering the filter element relatively economical to produce. In doing so favourable use may be made of the presence of existing element structures, such as the lower end of a reinforcing rib.

The invention will now by way of example be elucidated further along a drawing in which:

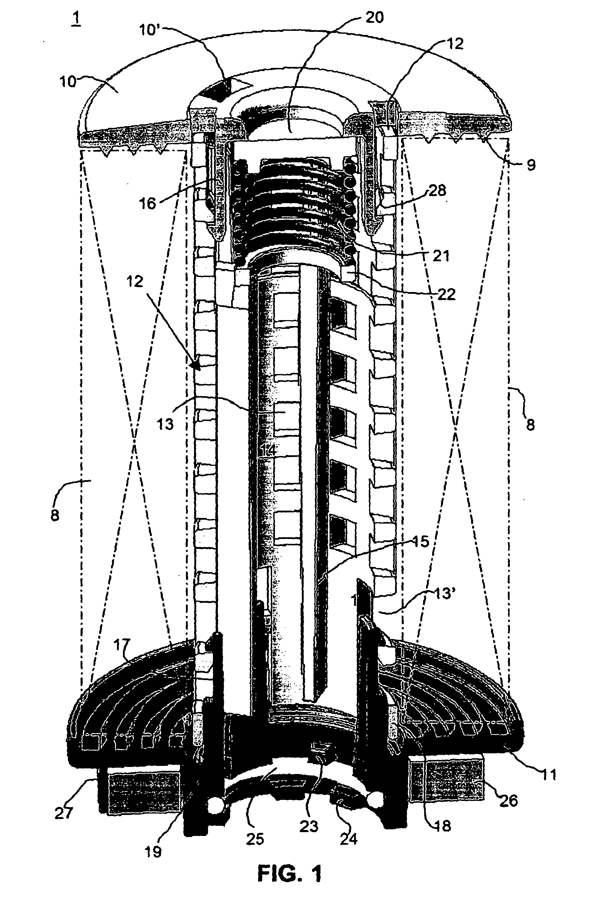

Figure 1 is a cross section of an embodiment in accordance with the invention

In the figure, identical reference numbers relate to identical or at least comparable technical features.

Figure 1 depicts a filtering element 1, in practice also denoted cartridge, which may be incorporated in a any commonly known filtering device housing. Such housing, which is not depicted in the present figure, may e.g. show an upper lid part, a bottom lid part and a central body 5 comprising a chamber enclosed by said parts, within which the filter element 1 is incorporated. Such device commonly show communication ports for an incoming and an outgoing flow of oil, which ports may be connected to the leads of a hydraulic system, e.g. for lubricating a mechanical device in which the filter device and/or the filter element 1 may be incorporated.

The filter element 1 is in line with the current example preferably cylindrically shaped and comprises filtering material not depicted here, carried by a central, perforated core 12. The core 12 in the currently shown fitter element is composed of synthetic material, and compresses rectangular, if not square perforations 13. Such square perforation, which is known per se, allows for an improved passage of oil as compared to the circular perforations that were known up to now in combination with the present high efficiency micro filter material.

The core 12 defines an interior space 14 for receiving oil filtered by filtering material 8 of the element 1 and passed through the perforations 13. The interior space 14 communicates with an outlet port of the filter device, to which port the lower portion of the filtering element 1 connects, in casu via O-ring 25. The oil to be filtered enters the filtering chamber in which the element 1 is located via an entry port located at some part of the housing, outside the exit port to which the lower part 23-25 of the filter element 1 connects.

The axial end faces of the filter material 8, which is incorporated around the central core 12, are shaped flat and oriented perpendicular to the longitudinal axis of the filter element 1. The material ends are dosed for passage of oil by so-called closure elements 10 and 11, which at least for a major part are of a matching, generally flattened shape. The elements 10, and 11 are in the present embodiment connected to the central core 12, however, are at least at one end of the central core 12, simultaneously provided with some axial play. According to the invention the closure element 10 comprising the by-pass valve 20 still to be discussed, is stiffly fixed to the central core 12, and should at manufacture also be mounted first The axially opposite end however, is provided with said axial play feature. This feature, still to be discussed further, allows for relatively large manufacturing tolerances, relieving the manufacture from high precision strain, and consequently from high cost associated therewith. The closure elements and/or parts 10 and 11 are in a known manner preferably provided with annular and concentrically disposed ribs 9. These are designed for axial penetration in the filter material 8, thus providing an additional filtering safety for in unexpected cases where e.g. through pressure shocks in a said hydraulic system, the filter might become axially somewhat dislocated. More importantly however, they are in the present invention used for providing an initial pressure difference, still to be discussed further, which is required for fully closing a relevant closure element 10 and 11 to the relevant axial end face of the filtering material 8. For instance, where such rib may axially have a dimension of 1.5 mm and at manufacture penetrates e.g. about half of its axial length into the filtering material 8. This will be sufficient to generate said initial pressure difference, and will cause the closure elements 10, 11 to become pressed firmly against the relevant axial end face of filtering material 8 within a second, as soon as the filtering element is set into normal operation.

At the closure element 10 opposite from the exit opening with parts 23-25, the element is provided with a by-pass valve 20 which opens an entry to the interior chamber 14 under normal operating conditions, in practice at a pressure value of about 1 Bar. For this reason the by-pass valve 20 is supported by an elastically deformable pressure element 21, in casu embodied by a helical spring. The elastically deformable element 21, at its opposite end rests against a support 22 fixed to the central core 12, in casu by forming a whole with it.

The closure elements 10 and 11 are in the current embodiment attached to the central core 12 via axially extending limbs 16 and 17 respectively, which click-connect to said core. The limbs 16, 17 project dose to the inner wall parts of the central core 12 so as to provide a centering and radial locating means for the closure element relative to the central core 12, and consequently to the filtering material 8. The click-connection is here realised by a hook-like end part of the limbs 16, 17 that hooks with a concentrically ring part of the core 12, forming square openings 13 with axially extending wall parts. In the present and preferred embodiment, only the lower closure element 11 is click-connected with axial play rotative to the core 12. In this embodiment the play is realised by a groove provision 19 in the end closure element 11, in casu at the foot part of the limbs 17, into which the lower part 18 of the core may slide, while at the same time the head part of the hook-shaped end of the limb 17 is axially made smaller than the relevant opening 13' into which said part snaps. Vice versa, as in the illustrated case, the axial dimension of the relevant openings 13' may be made larger relative to that of the other openings 13, so as to allow full snapping of the head part of a limb.

The closure element 11 is to its lower side provided with a cylindrical part, to the inner wall of which the limbs 17 are attacked. Bellow the level of attachment are provided a number of notches 24, which in combination with the lower end of the limbs 17 define a seat for a sealing element, here provided in the form of an O-ring 25, by which the filter element 1 may be connected to an outlet leads in a sealed manner. The lower notches 24 are located to the cylindrical inner wall, between the projection of the limbs 17. At the level of the lower end of the limbs 17 supporting notches 23 may be provided for further definition of the seat of the sealing element. In casu, two lower notches 24 and one upper notch 23 are provided circumferentially between each projection of two neighbouring limbs 17. Preferably the upper notch 23 is located in between the axial projection of the notches 24. In this manner it is realised that the closure element 11 may be produced by injection moulding, so that both a favourable level of cost and a relatively easy manner of production of this part is ensured. To the lower side of the closure element 11 there is further provided an axial outward projection wall 27, for receiving and preferably clamping an in it self and in combination with oil filter well known magnetic means 26, for stopping any relatively larger particles present in the oil to be filtered.

Preferably, at least the lower limbs 17, and more preferably also the upper limbs 16 are provided in two pairs of mutually close to one another located limbs 16, 17, while between the pairs a relatively large circumferential distance is left. The upper closure element 10 is at a radial outer side of each limb 16 provided with openings 10' so as to allow a relatively favourable manner of injection moulding at producing the element. Afterwards however, either immediately after injection moulting, or at manufacture these openings 10' are dosed for passage of oil by a closing means such as a packing or sealing means. The axial ends of the core element 12 are produced somewhat thinner in radial thickness, in that at the inner wall side the radial dimension of the inner space 14 of the core is somewhat larger than at the major and lengthwise central part of the core 12. In this manner, both a favourable manner of inserting the limbs relative to the central core 12 is realised, i.e. with reduced chance of forcing the materials, and a strong, i.e. reinforced central part of the core 12 are provided. Also favourable a sloping edge 28 may be made for guiding the hook-part of the limbs before snapping into the relevant perforation 13 or 13' as the case may be. The lower limbs 17 are for reason of proper guidance of the mutual axial play between core 12 and closure element 11 produced relatively thick at their lower ends, such that the outer circumference thereof fits the inner circumference of the lower end part of the core 12.

The central core 12 is further provided with stiffening members in the form of axialy extending ribs 15, forming a whole with the perforated cylindrical part of the core 12. In this embodiment three ribs 15 are present, distributed evenly over the circumference, and the ribs 15 to their upper end, i.e. to the oil entry side, support the afore mentioned annular ring 22 for supporting said spring element 21. As depicted the core 12 may to its lower side for reason of further stiffness be provided parity closed, i.e. without, or with relatively less number of perforations 13.

The invention, apart from the following claims, also relates to the preceding description and all details and aspects in the drawing which are directly and unambiguously derivable there from, at least by a man skilled in the art.

## Claims

1. Micro-filter element (1) comprising a perforated central core (12) around which a substantial layer of micro-filtering material (8) is incorporated, axial end faces of said material being closed for passage of oil by means of end closure elements (16, 17), wherein one of said end closure elements (11) is provided with at least a couple of axially projecting limbs (17), a hook-like part of which each engages with a perforation (13) of said central core (12), such that a mutual connection with a limited amount of mutual axial play is achieved, **characterised in that** another of said end closure elements (10) is provided with a valve system (20-22) comprising a by-pass valve (20) for opening an entry to an interior space (14) defined by the central core (12) at a maximum flow of oil through the micro-filter element (1), wherein an orifice is integrated in the by-pass valve (20) for realising an additional by-pass flow over the micro-filter element (1), wherein the orifice provides a restriction that is defined by departing from allowed pressure difference at the lowest given flow of oil.

2. Micro-filter Element (1) according to claim 1, **characterised in that** the valve system (20-22) comprises a pressure spring (21), and is preferably incorporated in the interior space (14) defined by the central core (12), preferably near an axial end thereof.

3. Micro-filter Element (1) according to claim 1 or 2, **characterised in that** the end closure element (10) which is provided with the valve system (20-22) is connected to the central core (12) without axial play.

4. Micro-filter Element (1) according to claim 3, **characterised in that** a connection of the end closure element (10) to the central core (12) is realised by a snapping means (16), the design of which at least corresponds to, or otherwise is identical to that of the snapping means (17) applied at the other end closure element (11) which is connected with axial play.

5. Micro-filter Element (1) according to any of the preceding claims, **characterised in that** the axial play is realised by mutual adjustment of the axial dimension of one of the hook-like part of a limb (17) and a relevant perforation (13') into which said part (17, 19) snaps.

6. Micro-Filter Element (1) according to claim 5, **characterised in that** a relevant perforation (13') is designed larger than the majority of the perforations (13).

7. Micro-Filter Element according to any of the preceding claims **characterised in that** the end closure element (11) that is connected with axial play, is provided with a annular groove (19) for receiving a displacement of the relevant axial end (18) of the central core (12) up to a level axially beyond the level of a main contacting plane of the end closure element (11).

8. Micro-Filter Element (1) according to claim 7, **characterised in that** the groove (19) is located in the projection area of a fitted central core (12), immediately at a radial outer foot part of a limb (17) for connection of the end closure element (11) to said core (12).

9. Micro-Filter Element (1) according to any of the preceding claims, **characterised in that** the limb parts (16, 17) of an end closure element are provided in two pairs of limbs (16, 17), which limbs (16, 17) as taken along an intersecting imaginary circle, are located at a mutual distance which is closer to one another in said pairs than between said pairs.

10. Micro-Filter Element (1) according to any of the preceding claims, **characterised in that** the element (1) or filter device in which such may be incorporated is provided with a sealing element (25), e.g. an O-ring, in which the sealing element (25) is incorporated between radially extending notches (23, 24) projecting from an inner wall part of the micro-filter element (1) or device into which such may be incorporated.

11. Micro-filter Element (1) according to any of the preceding claims, **characterised in that** an end closure element (10, 11) and the pertaining limbs (16, 17) are produced as a unit.

12. Micro-Filter Element (1) according to any of the preceding claims, **characterised in that** an end closure element (10, 11) is produced in a synthetic material.

## Patentansprüche

1. Mikrofilterelement (1) umfassend einen perforierten zentralen Kern (12), um welchen eine umfangreiche Schicht aus Mikrofiltermaterial (8) angeordnet ist, wobei axiale Stirnseiten des Materials für den Durchgang von Öl mittels Endverschlusselementen (10, 11) abgeschlossen sind, wobei eines der Endverschlusselemente (11) mit mindestens einem Paar von axial hervorstehenden Armen (17) versehen ist, von denen ein hakenartiger Teil jeweils mit einem Durchbruch (13) des zentralen Kerns (12) kuppelt, so dass eine gegenseitige Verbindung mit einem begrenzten Ausmaß von gegenseitigem axialem Spiel erreicht wird, **dadurch gekennzeichnet, dass** ein weiteres der Endverschlusselemente (10) mit einem Ventilsystem (20 - 22) versehen ist, das ein Umgehungsventil (20) zum Öffnen eines Eingangs zu einem Innenraum (14) umfasst, der durch den zentralen Kern (12) bei einem maximalen Ölfluss durch das Mikrofilterelement (1) definiert ist, wobei eine Öffnung in dem Umgehungsventil (20) integriert ist, um einen zusätzlichen Umgehungsfluss über das Mikrofilterelement (1) zu realisieren, wobei die Öffnung eine Drosselung bereit stellt, die durch die Abweichung von der zugelassenen Druckdifferenz bei dem niedrigsten vorgesehenen Ölfluss definiert wird.

2. Mikrofilterelement (1) nach Anspruch 1, **dadurch gekennzeichnet, dass** das Ventilsystem (20 - 22) eine Druckfeder (21) umfasst und vorzugsweise in dem Innenraum (14) angeordnet ist, der von dem zentralen Kern (12) definiert wird, vorzugsweise nahe dessen axialen Ende.

3. Mikrofilterelement (1) nach Anspruch 1 oder 2, **dadurch gekennzeichnet, dass** das Endverschlusselement (10), welches mit dem Ventilsystem (20 - 22) versehen ist, ohne axiales Spiel mit dem zentralen Kern (12) verbunden ist.

4. Mikrofilterelement (1) nach Anspruch 3, **dadurch gekennzeichnet, dass** eine Verbindung des Endverschlusselementes (10) mit dem zentralen Kern (12) durch Rastmittel (16) realisiert ist, deren Ausgestaltung mindestens derjenigen entspricht oder andererseits identisch mit derjenigen der Rastmittel (17) ist, die an dem anderen Endverschlusselement (11) angeordnet sind, welches mit axialem Spiel verbunden ist.

5. Mikrofilterelement (1) nach irgendeinem der vorhergehenden Ansprüche, **dadurch gekennzeichnet, dass** das axiale Spiel durch eine gegenseitige Einstellung der axialen Dimensionen eines der hakenartigen Teile eines Arms (17) und eines entsprechenden Durchbruchs (13'), in welche das Teil (17, 19) einrastet, realisiert ist.

6. Mikrofilterelement (1) nach Anspruch 5, **dadurch gekennzeichnet, dass** ein entsprechender Durchbruch (13') größer ausgestaltet ist als die Mehrheit der Durchbrüche (13).

7. Mikrofilterelement (1) nach irgendeinem der vorhergehenden Ansprüche, **dadurch gekennzeichnet, dass** das Endverschlusselement (11), das mit axialem Spiel verbunden ist, mit einer ringförmigen Nut (19) versehen ist, um einen Versatz des entsprechenden axialen Endes (18) des zentralen Kerns (12) bis zu einem axialen Niveau jenseits des Niveaus einer Hauptkontaktebene des Endverschlusselementes (11) aufzunehmen.

8. Mikrofilterelement (1) nach Anspruch 7, **dadurch gekennzeichnet, dass** die Nut (19) in dem Hervorstehbereich eines eingepassten zentralen Kerns (12) angeordnet ist, direkt an einem äußeren radialen Fußteil eines Arms (17) zur Verbindung des Endverschlusselements (11) mit dem Kern (12).

9. Mikrofilterelement (1) nach irgendeinem der vorhergehenden Ansprüche, **dadurch gekennzeichnet, dass** die Armteile (16, 17) eines Endverschlusselementes mit zwei Paaren von Armen (16, 17) vorgesehen sind, wobei die Arme (16, 17) mit einem gegenseitigen Abstand angeordnet sind, der in einem Paar kleiner ist als zwischen den Paaren selber, entlang eines gedachten Schnitt-Kreises gesehen.

10. Mikrofilterelement (1) nach irgendeinem der vorhergehenden Ansprüche, **dadurch gekennzeichnet, dass** das Element (1) oder die Filtervorrichtung, in welche ein solches Element angeordnet ist, mit einem Dichtelement (25) versehen ist, zum Beispiel einem O-Ring, wobei das Dichtelement (25) zwischen sich radial erstreckenden Einbuchtungen (23, 24) angeordnet ist, die von einem Innenwandteil des Mikrofilterelementes (1) oder der Vorrichtung, in welche ein solches integriert ist, hervorstehen.

11. Mikrofilterelement (1) nach irgendeinem der vorhergehenden Ansprüche, **dadurch gekennzeichnet, dass** ein Endverschlusselement (10, 11) und die entsprechenden Arme (16, 17) als Einheit hergestellt sind.

12. Mikrofilterelement (1) nach irgendeinem der vorhergehenden Ansprüche, **dadurch gekennzeichnet, dass** das Endverschlusselement (10, 11) aus einem synthetischen Material hergestellt ist.

## Revendications

1. Élément microfiltrant (1) comprenant un noyau central perforé (12) autour duquel est incorporée une couche substantielle de matériau microfiltrant (8), les faces d'extrémité axiale dudit matériau étant fermées au passage de l'huile au moyen d'éléments de fermeture d'extrémité (16, 17), dans lequel l'un desdits éléments de fermeture d'extrémité (11) est muni d'au moins un couple de membres se projetant axialement (17), dont une partie en crochet s'engage dans une perforation (13) dudit noyau central (12), de sorte à obtenir un raccordement mutuel avec une valeur de jeu axial mutuel limitée, **caractérisé en ce qu'**un autre élément desdits éléments de fermeture d'extrémité (10) est muni d'un système de soupape (20 à 22) comprenant une soupape de dérivation (20) pour ouvrir une entrée vers un espace intérieur (14) défini par le noyau central (12) au débit maximum d'huile à travers l'élément microfiltrant (1), dans lequel un orifice est intégré dans la soupape de dérivation (20) pour obtenir un écoulement de dérivation supplémentaire sur l'élément microfiltrant (1), dans lequel l'orifice comporte une restriction qui est définie en s'écartant de la différence de pression autorisée pour l'écoulement d'huile donné le plus bas.

2. Élément microfiltrant (1) selon la revendication 1, **caractérisé en ce que** le système de soupape (20 à 22) comprend un ressort de pression (21) et il est incorporé de préférence dans l'espace intérieur (14) défini par le noyau central (12), de préférence près d'une extrémité axiale de celui-ci.

3. Élément microfiltrant (1) selon la revendication 1 ou 2, **caractérisé en ce que** l'élément de fermeture d'extrémité (10) qui est muni du système de soupape (20 à 22) est raccordé au noyau central (12) sans jeu axial.

4. Élément microfiltrant (1) selon la revendication 3, **caractérisé en ce qu'**un raccordement de l'élément de fermeture d'extrémité (10) au noyau central (12) est réalisé par un moyen d'encliquetage (16), dont la conception correspond au moins ou sinon est identique à celle du moyen d'encliquetage (17) appliqué à l'autre élément de fermeture d'extrémité (11) qui est raccordé avec un jeu axial.

5. Élément microfiltrant (1) selon l'une quelconque des revendications précédentes, **caractérisé en ce que** le jeu axial est réalisé par réglage mutuel de la dimension axiale de l'une des parties en crochet du membre (17) et une perforation correspondante (13') dans laquelle ladite partie (17, 18) vient s'encliqueter.

6. Élément microfiltrant (1) selon la revendication 5, **caractérisé en ce qu'**une perforation correspondante (13') est conçue de manière à être plus grande que la majorité des perforations (13).

7. Élément microfiltrant (1) selon l'une quelconque des revendications précédentes, **caractérisé en ce que** l'élément de fermeture d'extrémité (11) qui est raccordé avec un jeu axial est muni d'une gorge annulaire (19) destinée à recevoir le déplacement de l'extrémité axiale correspondante (18) du noyau central (12) jusqu'à un niveau axialement au-delà du niveau d'un plan de contact principal de l'élément de fermeture d'extrémité (11).

8. Élément microfiltrant (1) selon la revendication 7, **caractérisé en ce que** la gorge (19) est située dans la zone de projection d'un noyau central ajusté (12), juste sur une partie de pied radial extérieur d'un membre (17) pour le raccordement de l'élément de fermeture d'extrémité (11) audit noyau (12).

9. Élément microfiltrant (1) selon l'une quelconque des revendications précédentes, **caractérisé en ce que** les parties de membre (16, 17) d'un élément de fermeture d'extrémité sont prévues sous la forme de deux paires de membres (16, 17), membres (16, 17) se trouvant sur un cercle d'intersection imaginaire, qui sont situés à une distance mutuelle telle qu'ils sont plus proches l'un de l'autre dans lesdites paires qu'entre lesdites paires.

10. Élément microfiltrant (1) selon l'une quelconque des revendications précédentes, **caractérisé en ce que** l'élément (1) ou le dispositif filtrant dans lequel celui-ci peut être incorporé est muni d'un élément de jonction étanche (25), par exemple un joint torique, dans lequel l'élément de jonction étanche (25) est incorporé entre des encoches s'étendant radialement (23, 24) se projetant depuis la partie de paroi intérieure de l'élément microfiltrant (1) ou un dispositif dans lequel celui-ci peut être incorporé.

11. Élément microfiltrant (1) selon l'une quelconque des revendications précédentes, **caractérisé en ce qu'**un élément de fermeture d'extrémité (10, 11) et les membres correspondants (16, 17) sont fabriqués d'un seul tenant.

12. Élément microfiltrant (1) selon l'une quelconque des revendications précédentes, **caractérisé en ce qu'**un élément de fermeture d'extrémité (10, 11) est fabriqué dans une matière synthétique.
